# EUROPEAN PATENT APPLICATION

(11) **EP 0 685 755 A1**
(43) Date of publication of application: **06.12.1995**
(21) Application number: 94116753.8
(22) Date of filing: 24.10.1994
(51) Int. Cl.: G02C 5/00

(54) **Frame of eyeglasses of an aluminum alloy or other metals which permit no soldering, parts thereof and hinges**

(30) Priority: 31.05.1994 JP 142282/94
(71) Applicant: Nishimura Precision Co., Ltd., Sabae-shi, Fukui-ken (JP)
(72) Inventor: Kakugawa, Satoru, c/o Daiichi Engin. Co., Ltd., Takefu-shi, Fukui-ken (JP)
(74) Representative: VOSSIUS & PARTNER

(57) **Abstract**

Disclosed is a frame of eyeglasses made of aluminum alloy or any other light metal which prevents soldering or plating, and therefore could not be thought of being used as material of frames. Frame parts of aluminum alloy or such a light metal have soldering-permitted deposition layers formed thereon according to the present invention, thereby permitting the soldering of the frame parts into an integral frame form. Deposition layers are formed in the metallurgical penetration into the counter surface, and therefore, such deposition layers cannot be peeled off, thereby assuring the stout soldering. Thus, frames of eyeglasses can be made of aluminum alloy or any other light metal which could not be thought of being used in making frames of eyeglasses. Such light frames of eyeglasses are most desirable because persons do not feel tired even though they wear eyeglasses for a long time.

## Description

The present invention relates to a frame of eyeglasses of an aluminum alloy or any other metal which permits no soldering, and to hinges foldably connecting the front to the temples of eyeglasses.

A frame of eyeglasses for holding two lenses must be light enough not to cause a person wearing his eyeglasses to feel tired after wearing a relatively long time. Therefore, the frame is made of a light material, such as titanium or nickel-titanium alloy. Frames of these metals are light, compared with those of stainless steel or nickel silver.

Disadvantageously titanium or nickel-titanium alloy prevents soldering, and therefore, frame parts of such a light metal are plated, and the so plated frame parts can be soldered. The plating for soldering requires extra steps, and accordingly the cost involved for making frames of eyeglasses will increase. Also disadvantageously, the so plated frame parts cannot be soldered firmly because of the liability of the plating to the peeling-off from the frame metal.

A frame of eyeglasses if made of an aluminum alloy will be lighter than that of titanium or nickel-titanium alloy. The alloy, however, permits neither soldering nor plating. Therefore, frame parts of aluminum alloy must be riveted or caulked. Frames thus made up by the so riveted or caulked parts present unpleasing appearance.

Titanium, nickel-titanium alloy or aluminum alloy can be spot-welded, and therefore, frame parts of such a material can be spot-welded to a frame of eyeglasses. Spot-Welding is not easy, compared with soldering. Parts to be spot-welded must be pressed together while being subjected to spot welding, and therefore, such parts are liable to be spoiled in appearance.

In this connection, the areas of parts to be spot-welded are limited. Also, minute parts cannot be spot-welded. From these points of view spot welding, in fact, is not appropriate for the purpose of integrally connecting frame parts into frames of eyeglasses.

Hinges are used to permit the foldable connecting of the front to the opposite temples of the eyeglasses. Such hinges are very small in size, and the temples will be folded on the front many times. In addition, each hinge must support an associated temple in the form of cantilever. The force which is applied to the opposite temples will be transmitted to the hinges as bending force, thereby wearing the slidably contact areas of the hinges. As a result the hinges are loosened, and the eyeglasses are liable to shift from the correct wearing position on one's face.

No matter what sort of material hinges may be made of, the wearing will be caused, and particularly titanium, nickel-titanium alloy or aluminum alloy is liable to be easily worn. In an attempt to prevent the wearing of hinges of such light metals washers are used to avoid the rubbing of parts of same metal. The attaching of minute washers to small hinges requires complicated and time-consuming work, and such washered hinges are very expensive.

One object of the present invention is to provide a frame of eyeglasses of light metals or alloys which permits no soldering, particularly a frame of an aluminum alloy.

Another object of the present invention is to provide a frame of an aluminum alloy having hinges free of substantial wearing.

To attain this object a frame of eyeglasses of an aluminum alloy or any other metal which permits no soldering, the parts of said frame being treated so as to permit soldering for connecting such parts into an integral form by soldering, is improved according to the present invention in that each part has one or more deposition layers formed at its selected areas for connecting to an associated part, and all parts are soldered via their deposition layers to provide the frame of eyeglasses, said deposition layers being formed by applying one or more electrodes of a selected material to the selected areas of the part; and by subjecting the electrodes to electric discharges of direct or alternating current of 4-8A at the frequency of 10⁻¹ to 10⁻³ seconds under 50-80V for a very short time ranging from 10⁻⁵ to 10⁻⁶ seconds, thereby heating the electrodes at the temperature of 8,000 °C to 25,000 °C , thus causing the selected material to be ionized, and allowing the selected material thus ionized to metallurgically transfer and alloy well with the aluminum alloy or other metals which permit no soldering, that is, the deposition layers and the selected areas of the frame are connected integrally through alloyed portions therebetween.

The electrodes are of metals which permit soldering such as Mo or nickel silver, and soldering is permitted via the deposition layers formed as described above. Such deposition layers is formed on the slidably contact surface of the male or female hinge part, thereby providing a wearing-resistant slidable surface. The layer is formed by diffusing, penetrating and accumulating minute particles on the selected area of a frame part, and the resulting irregular surface can be smoothed by pressing or planing. When occasions demand, a male-and-female type hinge may have ceramic powder intervening between the slidably contact surfaces of its male and female parts.

Other objects and advantages of the present invention will be apparent from the following description of preferred embodiments of the present invention, which are shown in accompanying drawings.
Fig.1 is a perspective view of a frame of eyeglasses;
Fig.2 is a perspective view of a side joint piece having deposition layers on its rear surface;
Fig.3 is an enlarged view showing, in section, a deposition layer;
Fig.4 is an enlarged front view of a male-and-female type hinge; and
Fig.5 is an enlarged longitudinal section of the male-and-female type hinge.

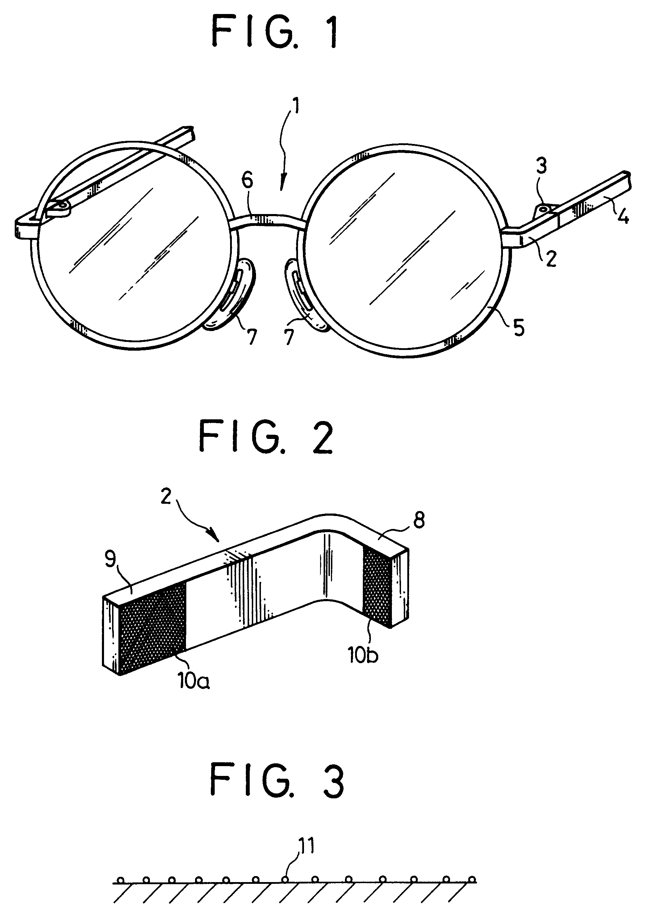

Referring to Fig.1, a metal frame of eyeglasses comprises a front 1 having two rims 5 connected by a bridge 6, and two opposite temples 4 connected to the rims 5 via associated side joint pieces 2 and hinges 3. The side joint pieces 2 are soldered to the rims 5 of the front 1, and the male and female hinge parts are coupled by rivets, thereby permitting the opposite temples 4 to be folded on the front 1. Nose pads 7 are attached to the rims 5 via associated studs.

The rims 5 are connected to the bridge 6 and to the side joint pieces 2; the male and female hinge parts 3 are connected to the side joint pieces 2 and to the temples 4 respectively. These parts have deposition layers formed thereon, and are connected by soldering their deposition layers. In case of an aluminum frame which permits no plating thereon, its parts have deposition layers of soldering-permitted metal for soldering associated parts together.

Fig.2 shows an L-shaped side joint piece 2, the front and side sections 8 and 9 of which side joint piece 2 have deposition layers 10a and 10b. These deposition layers are formed by applying electrodes of a soldering-permitted metal such as Mo or nickel silver to the terminating areas of the front and side sections; and by subjecting these electrodes to electric discharges of direct or alternating current of 4-8A at the frequency of 10⁻¹ to 10⁻³ seconds under 50-80V for a very short time ranging from 10⁻⁵ to 10⁻⁶ seconds, thereby heating the electrodes at the temperature of 8,000 °C to 25,000 °C , thus causing the soldering-permitted metal to be ionized, and allowing the metal thus ionized to metallurgically transfer to the counter surface and alloy well with the aluminum alloy.

The deposition layer 10a is used in soldering the side joint piece 2 to the hinge 3 whereas the deposition layer 10b is used in soldering the side joint piece 2 to the rim 5. The deposition layer 10 can be formed by subjecting the electrode of soldering-permitted metal to electric discharge, which generates a localized heat for such a very short time that little or no heat distortion is caused in the frame. The deposition layer 10 thus formed is about 2.5 to 100 microns thick.

Fig.3 shows the deposition layer 10 at an enlarged scale. The material of the electrode transfers to the counter surface in the form of particles 11, and then such metal particles are dispersed, penetrating into the counter surface. Thus, the deposition layer 10 results. The electrode is of a metal which permits soldering, so that a soldering-permitted deposited metal layer 10 is formed. The soldering-permitted deposition layers of associated parts are soldered to form a frame.

The deposition layers are formed on the slidably contact surfaces of male and female hinge parts for the purpose of improving their wear-resistant properties. As a matter of course, electrodes must be made of a metal having good wear-resistant properties. Deposition layers of Mo or nickel silver will provide slidable surfaces of good wear-resistant and lubricating properties.

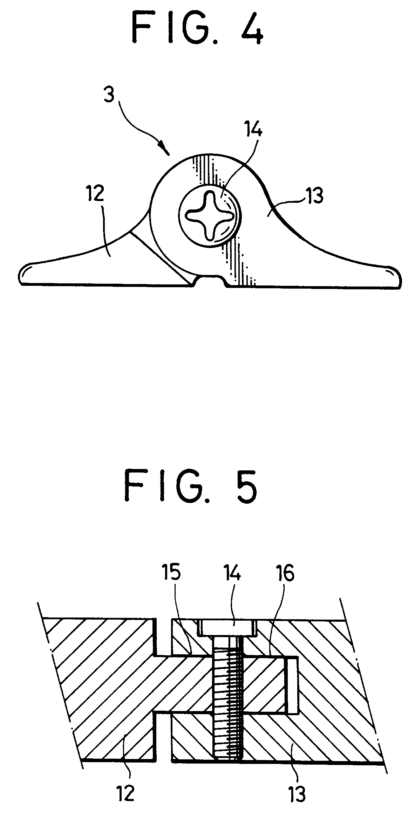

Fig.4 shows a male-and-female type hinge at an enlarged scale. It has male and female hinge parts 12 and 13 coupled by a screw 14, thereby permitting these parts to rotate about the screw 14. Fig.5 shows, in section, the male and female hinge parts 12 and 13 coupled by the screw 14. Their slidable surfaces 15 have deposition layers 16. These deposition layers can be formed by applying electrodes for instance, of Mo or nickel silver to the slidable surfaces 15; and by subjecting these electrodes to electric discharges of direct or alternating current of 4-8A at the frequency of 10⁻¹ to 10⁻³ seconds under 50-80V for a very short time ranging from 10⁻⁵ to 10⁻⁶ seconds, thereby heating the electrodes at the temperature of 8,000 °C to 25,000 °C , thus causing the electrode metal to be ionized, and allowing the metal thus ionized to metallurgically transfer and alloy well with the material of the hinge.

The deposition layer 16 may be formed on one or both of the slidable surfaces of the male and female hinge parts 12 and 13. The deposition layer 16 may be pressed or planed to reduce its irregularities such as shown in Fig.3.

The deposition layer 16 formed on the slidable surface 15 of either hinge part has the effect of improving the wear-resistance of the hinge parts, and lubricant applied to the slidable surface 15 of either hinge part is effective in reducing the friction between the male and female hinge parts, thereby assuring the smooth folding of the opposite temples on the front of the frame. Liquid lubricant if used, will be heated to escape in vapor when parts are soldered. Therefore, ceramic powder is used as lubricant. It is heat-resistant enough to bear up against the soldering heat.

As may be understood from the above, frame parts made of aluminum alloy or any other light metal which prevents plating and soldering have soldering-permitted metal depositions formed thereon, thereby permitting the soldering of the frame parts into an integral frame form. Male and female hinge parts have similar deposition layers formed on their slidable surfaces, which deposition layers function as wear-resistant depositions, and in addition, their slidable surfaces may have ceramic powder as lubricant, thereby facilitating the folding of the opposite temples on the front of the frame. The deposition layers are formed in the metallurgical penetration into the counter surface, and therefore such deposition layers cannot be peeled off, thereby assuring the stout soldering. Thus, frames of eyeglasses can be made of aluminum alloy or any other light metal which prevents soldering, and therefore could not be thought of being used in making frames of eyeglasses. Such light frames of eyeglasses are most desirable because persons do not feel tired even though they wear eyeglasses for a long time.

## Claims

1. A frame of eyeglasses of an aluminum alloy or any other metal which permits no soldering, the parts of said frame being treated so as to permit soldering for connecting such parts into an integral form by soldering, characterized in that each part has one or more deposition layers formed at its selected areas for connecting to an associated part, and all parts are soldered via their deposition layers to provide the frame of eyeglasses, said deposition layers being formed by applying one or more electrodes of a selected material to the selected areas of the part; and by subjecting the electrodes to electric discharges of direct or alternating current of 4-8A at the frequency of 10⁻¹ to 10⁻³ seconds under 50-80V for a very short time ranging from 10⁻⁵ to 10⁻⁶ seconds, thereby heating the electrodes at the temperature of 8,000°C to 25,000°C , thus causing the selected material to be ionized, and allowing the selected material thus ionized to metallurgically transfer and alloy well with the aluminum alloy or other metals which permit no soldering.

2. Parts of a frame of eyeglasses of an aluminum alloy or any other metal which permits no soldering, characterized in that each part has one or more deposition layers formed at its selected areas for connecting to an associated part, said deposition layers being formed by applying one or more electrodes of a selected material to the selected areas of the part; and by subjecting the electrodes to electric discharges of direct or alternating current of 4-8A at the frequency of 10⁻¹ to 10⁻³ seconds under 50-80V for a very short time ranging from 10⁻⁵ to 10⁻⁶ seconds, thereby heating the electrodes at the temperature of 8,000 °C to 25,000 °C , thus causing the selected material to be ionized, and allowing the selected material thus ionized to metallurgically transfer and alloy well with the aluminum alloy or other metals which permit no soldering.

3. Male and female hinge parts of a frame of eyeglasses characterized in that each hinge part has deposition layers formed on its slidable areas, said deposition layers being formed by applying electrodes of a selected material to the slidable areas of the hinge part; and by subjecting the electrodes to electric discharges of direct or alternating current of 4-8A at the frequency of 10⁻¹ to 10⁻³ seconds under 50-80V for a very short time ranging from 10⁻⁵ to 10⁻⁶ seconds, thereby heating the electrodes at the temperature of 8,000 °C to 25,000 °C , thus causing the selected material to be ionized, and allowing the selected material thus ionized to metallurgically transfer and alloy well with the material of the hinge part.

4. Male and female hinge parts of a frame of eyeglasses according to claim 3, wherein said deposition layers are subjected to pressing or cutting, thereby reducing minute irregularities from the surfaces of said deposition layers.

5. Male and female hinge parts of a frame of eyeglasses according to claim 3 or 4, wherein there is ceramic powder between the slidable areas of the male and female hinge parts.
